# FASCICULE DE BREVET EUROPEEN

(11) **EP 0 440 051 B1**
(45) Date de publication et mention de la délivrance du brevet: **23.03.1994**
(21) Numéro de dépôt: 91100554.4
(22) Date de dépôt: 18.01.1991
(51) Int. Cl.: A47J 42/56, A47J 44/00

(54) **Appareil électroménager à fonctions multiples pour le traitement des aliments**
Universal-Küchenmaschine zum Bearbeiten von Nahrungsmitteln
Domestic food processor with multiple functions

(30) Priorité: 26.01.1990 FR 9000930
(43) Date de publication de la demande: 07.08.1991
(73) Titulaire: MOULINEX, F-93170 Bagnolet (FR)
(72) Inventeur: Arroubi, Mustapha, Moulinex, F-14123 Cormelles-le-Royal (FR); Parise, Vital André, Moulinex, F-14123 Cormelles-le-Royal (FR)
(74) Mandataire: May, Hans Ulrich, Dr.

(56) Documents cités:
- EP-A- 0 024 992
- EP-A- 0 120 496
- EP-A- 0 280 594
- FR-A- 2 483 697
- GB-A- 2 082 713
- GB-A- 2 093 553
- US-A- 3 611 358

## Description

La présente invention concerne un appareil électroménager à fonctions multiples pour le traitement des aliments et comprenant un boîtier dont une région formant embase est destinée à recevoir divers accessoires comportant un bol équipé d'un couvercle, et dans lequel tourne un outil de travail qui peut être, par exemple, un hachoir, un coupe-légumes, une centrifugeuse à fruits et qui est entraîné, à travers un trou pratiqué dans le fond du bol, par l'arbre de sortie d'un groupe moteur, ainsi qu'un dispositif électrique de commande de l'alimentation du moteur comportant un moyen de détection de la présence du couvercle sur le bol et susceptible de faire prendre audit dispositif un état actif d'autorisation de mise en marche du moteur lorsque le couvercle est amené en sa position correcte de fermeture du bol, ainsi qu'un variateur de vitesse destiné à adapter la vitesse de l'arbre de sortie en fonction de l'outil utilisé.

Un tel appareil électroménager à fonctions multiples est connu du document US-A-4 174 073. Toutefois, avec cet appareil, d'une part, la sécurité d'utilisation n'est pas absolues, car un enfant peut, en l'absence du bol sur l'embase, mettre l'appareil en marche au moyen du couvercle seul, et d'autre part, l'usager doit, à chaque changement d'accessoire, veiller à régler correctement la vitesse pour accomplir de façon satisfaisante la fonction choisie.

Le document FR-A-2 483 697 décrit un appareil électroménager à fonctions multiples dans lequel le dispositif de verrouillage de sécurité du bol et de son couvercle fait intervenir des moyens de détection adaptés à couper l'alimentation du moteur d'entraînement de l'outil si le bol et le couvercle ne sont pas tous les deux dans leurs positions respectives correctes de verrouillage mécanique. Avec cet appareil, l'usager doit également, à chaque changement d'accessoire, veuiller à régler correctement la vitesse pour obtenir un fonctionnement satisfaisant de l'outil utilisé.

Par ailleurs, il est connu d'après le document EP-A-120 496 relatif à un appareil électroménager destiné à recevoir divers outils de travail, de prévoir une adaptation de la vitesse du moteur d'entraînement en fonction de l'outil utilisé.

L'invention a pour but de réaliser un appareil électroménager à fonctions multiples pour le traitement des aliments, qui procure à la fois une sécurité d'utilisation absolue et un réglage automatique de la vitesse de son moteur en fonction de l'accessoire utilisé.

Selon l'invention, un appareil électroménager à fonctions multiples du type décrit précédemment, est plus particulièrement caractérisé en ce que le dispositif électrique de commande de l'alimentation du moteur comprend, en outre, un moyen de détection de la présence et du positionnement correct du bol sur l'embase, ainsi que des moyens d'identification des différents couvercles qui sont associés au moyen de détection de la présence du couvercle sur le bol et qui sont adaptés à commander le variateur de vitesse afin d'associer à chaque couvercle une vitesse déterminée de l'outil.

Grâce à ces nouveaux moyens de détection du bol et d'identification des accessoires, on comprendra que l'on obtient une sécurité d'utilisation absolue, et un fonctionnement automatique de l'appareil.

Plusieurs modifications de l'appareil selon la revendication principale sont définies dans les revendications dépendantes

Les caractéristiques et avantages de l'invention ressortiront d'ailleurs de la description qui va suivre, à titre d'exemple, en référence aux dessins annexés dans lesquels :

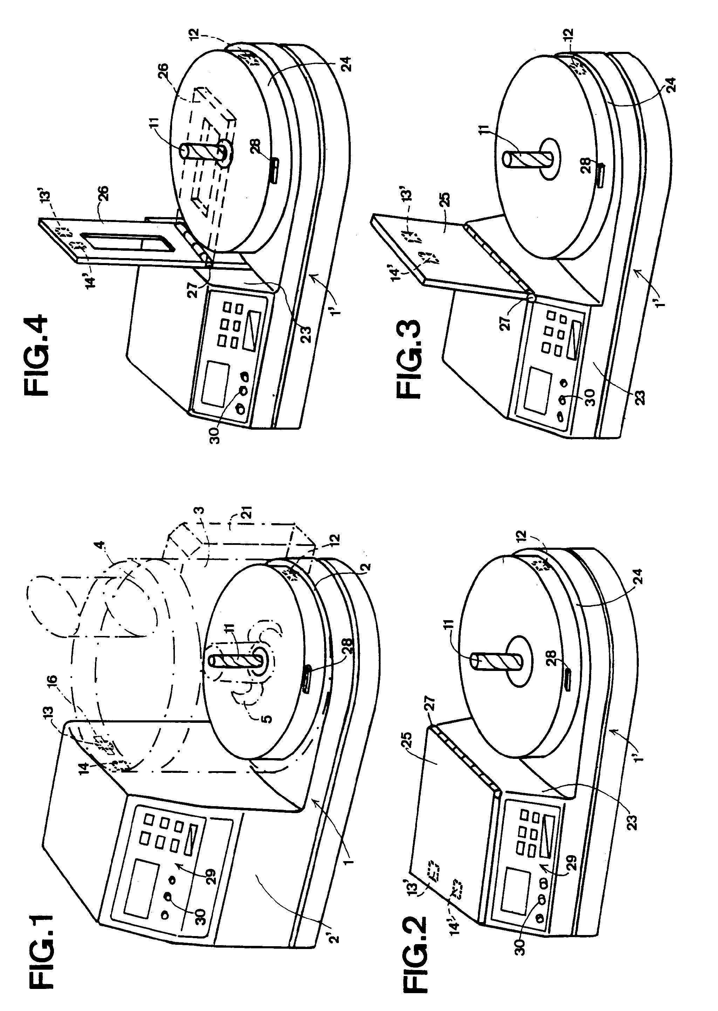

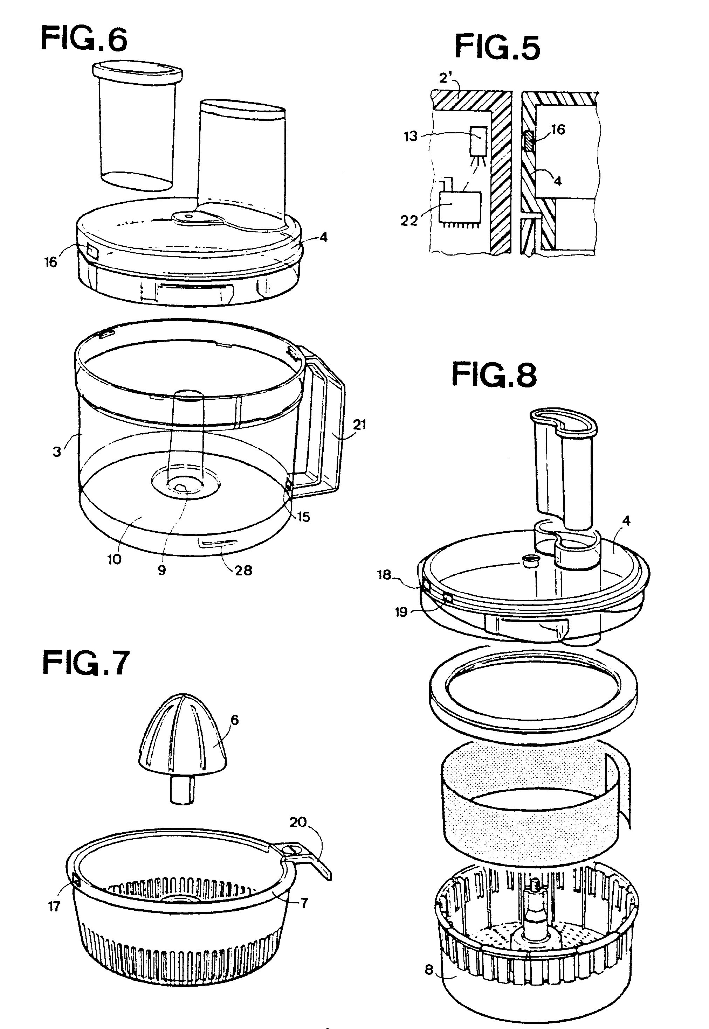

la figure 1 est une vue en perspective d'un appareil électroménager selon l'invention et comportant un bossage latéral et une embase de réception d'un accessoire représenté en traits interrompus ; la figure 2 est une vue en perspective d'une variante d'un appareil électroménager selon l'invention et comportant un petit bossage équipé d'un panneau mobile illustré en position rabattue sur le bossage ; la figure 3 est une vue analogue à la figure 2, mais avec le panneau mobile dressé en position de travail ; la figure 4 est une vue en perspective d'une variante de l'appareil de la figure 2 dans laquelle le panneau mobile est rabattable sur l'embase ; la figure 5 est une coupe verticale partielle à grande échelle du boîtier et d'un couvercle illustrant l'agencement des moyens de présence et d'identification du couvercle sur le bol ; la figure 6 représente en perspective à plus petite échelle un bol et un couvercle d'accessoire selon l'invention ; la figure 7 représente un accessoire presse-agrumes selon l'invention ; la figure 8 représente un accessoire centrifugeuse à fruits selon l'invention.

Comme représenté à la figure 1, l'appareil électroménager à fonctions multiples pour le traitement des aliments comprend un boîtier 1 présentant la forme générale d'un L constituée d'une embase 2 et d'un bossage latéral 2' s'étendant en hauteur sur pratiquement toute la hauteur de l'accessoire.

L'embase 2 est destinée à recevoir divers accessoires comportant un bol 3 équipé d'un couvercle 4 et dans lequel tourne un outil de travail qui peut être par exemple : un couteau-hachoir 5, un coupe-légumes (non représenté), un presse-fruits à cône rotatif 6 et grille 7 formant couvercle (figure 7), et une centrifugeuse à fruits à panier rotatif 8 (figure 8). L'outil de travail est entraîné à travers un trou 9 pratiqué dans le fond 10 du bol par l'arbre de sortie 11 d'un groupe moteur (non représenté) agencé dans le boîtier.

L'appareil électroménager comporte également un dispositif électrique de commande de l'alimentation du moteur comportant un moyen de détection de la présence du couvercle 4 sur le bol 3 et susceptible de faire prendre audit dispositif un état actif d'autorisation de mise en marche du moteur lorsque le couvercle 4 est amené en sa position correcte de fermeture du bol 3, ainsi qu'un variateur de vitesse (non représenté) destiné à adapter la vitesse de l'arbre de sortie 11 en fonction de l'outil utilisé.

Selon l'invention le dispositif électrique de commande de l'alimentation du moteur comprend, en outre, un moyen de détection de la présence et du positionnement correct du bol 3 sur l'embase 2, ainsi que des moyens d'identification des différents couvercles 4 qui sont associés au moyen de détection de la présence du couvercle sur le bol et qui sont adaptés à commander le variateur de vitesse afin d'associer à chaque couvercle 4 une vitesse déterminée de l'outil.

Les moyens de détection de la présence du bol et de détection de la présence du couvercle ainsi que les moyens d'identification du couvercle comportent, d'une part, des capteurs 12, 13 et 14 agencés dans le boîtier, et d'autre part, des actionneurs à distance 15, 16, 17, 18 et 19 agencés respectivement dans le bol et dans le couvercle.

Chaque capteur est constitué d'un élément à effet HALL, tandis que chaque actionneur à distance est constitué par un élément magnétique, tel que par exemple une plaquette métallique aimantée ou un aimant ferrite dont le flux va commander le capteur à effet HALL.

Comme le bol 3 et le couvercle 4 sont réalisés en matière plastique, le ou les actionneurs 15, 16, 17, 18, 19 peuvent être noyés dans ladite matière plastique (voir figure 5).

Afin d'obtenir le fonctionnement correct et éviter le plus possible l'atténuation du flux magnétique, le capteur 12 de la présence du bol, et l'actionneur 15 sont agencés respectivement dans l'embase 2 et dans la région de fond 10 du bol 3, tandis que les capteurs 13, 14, et les actionneurs correspondants de présence et d'identification 16, 17, 18 et 19 du couvercle 4 sont agencés respectivement dans le bossage 2' et dans le couvercle 4 de manière à être situés en regard les uns les autres lorsque le couvercle est amené en sa position correcte de fermeture du bol, illustrée schématiquement sur la figure 1.

Afin de réduire le coût de l'appareil, l'invention prévoit, pour accomplir les fonctions citées dans la présente Demande, d'utiliser seulement trois capteurs à effet HALL, un aimant 15 sur le bol 3 et un 16 ou 17 ou deux 18 et 19 aimants sur les couvercles 4. Pour tenir compte de la faible hauteur donnée aux couvercles, les capteurs 13 et 14 et aimants 16, 17, 18 et 19 se rapportant aux couvercles seront angulairement espacés et situés pratiquement dans un même plan horizontal.

Ainsi, le couvercle 4 de l'accessoire de la figure 6 comporte un seul aimant 16 qui pour la position correcte de fermeture dudit couvercle vient en regard du capteur 13. La grille couvercle 7 du presse-agrumes de la figure 7 comporte également un seul aimant 17 décalé angulairement de manière que, lorsque cette grille couvercle 7 occupe sa position correcte de fonctionnement correspondant à la superposition des poignées 20 du couvercle et 21 du bol, ledit aimant vient en regard du capteur 14. Quant à l'accessoire centrifugeuse de la figure 8, le couvercle 4 comporte deux aimants 18 et 19 espacés et orientés respectivement selon les mêmes références angulaires que celles des aimants 16 et 17.

Par conséquent, pour obtenir à la fois la détection de la présence du bol et des couvercles, ainsi que l'identification desdits couvercles, les capteurs sont reliés à un dispositif électronique de traitement des signaux 22 comportant un étage multiplexeur à trois entrées et dont les sorties sont reliées à un potentiomètre numérique, lui-même relié à un circuit intégré dont les signaux de sortie vont déclencher ou non l'état actif du dispositif de commande de l'alimentation du moteur ainsi que la commande du variateur de vitesse. Ce variateur de vitesse comporte de façon connue en soi un TRIAC monté en série avec le moteur et dont la gâchette reçoit les signaux de commande émis par ledit circuit intégré.

Selon les variantes illustrées aux figures 2, 3, et 4 le boîtier 1' présente un petit bossage 23 situé latéralement à l'embase 24, équipé d'un panneau mobile 25 ou 26 monté articulé autour d'un axe horizontal 27 agencé sur la face latérale du petit bossage tournée vers l'embase, les capteurs de présence et d'identification du couvercle 13', 14' étant agencés sur ledit panneau 25 ou 26 dans une région telle que lorsque le panneau est dressé verticalement (figure 3 et 4) lesdits capteurs sont situés en regard du ou des actionneurs 16, 17, 18 et 19 du couvercle du bol. Pour la position de rangement, les panneaux 25 et 26 sont rabattus respectivement sur le bossage 23 et sur l'embase 24.

On va décrire ci-après le fonctionnement de l'appareil avec différents accessoires.

Dans le cas où l'on utilise l'accessoire de la figure 6 équipé par exemple du couteau 5, ont vient placer le bol 3 sur l'embase 2 et on l'amène en sa position correcte, déterminée par des moyens mutuels d'indexation 28, de manière à placer l'aimant 15 en regard du capteur 12 Puis on place le couvercle 4 sur le bol 3 et on l'amène, par exemple au moyen d'un dispositif de verrouillage par rotation du type à baïonnette, en sa position correcte de fermeture de sorte que l'aimant 16 soit situé en regard du capteur 13. Les signaux émis alors par le capteur 13 sont traités par le dispositif électronique 22 de manière à faire prendre l'état actif au dispositif de commande de l'alimentation du moteur et à ajuster le variateur de vitesse à une valeur déterminée pour cet accessoire, c'est à dire dans ce cas une plage de valeurs allant du minimum au maximum et qui peuvent être incrémentées ou décrémentées par l'usager au moyen d'un clavier de commande 29. Par mesure de sécurité supplémentaire, l'usager déclenche le fonctionnement présélectionné de l'appareil au moyen d'un interrupteur général 30.

Dans le cas où l'on utilise l'accessoire presse-agrumes de la figure 7, la grille 7 formant le couvercle sera mise en position correcte de manière à amener l'aimant 17 en regard du capteur 14, et l'on obtiendra de la même manière que ci-dessus la détection de la présence de la grille et l'ajustement du variateur de vitesse à une valeur minimum.

Dans le cas où l'on utilise l'accessoire centrifugeuse de la figure 8, on comprendra que du fait que le couvercle porte deux aimants 18 et 19, les deux capteurs 13 et 14 sont influencés et l'on obtiendra, grâce au multiplexeur, également la détection de la présence du couvercle et l'ajustement automatique du variateur de vitesse à une vitesse maximum.

## Revendications

1. Appareil électroménager à fonctions multiples pour le traitement des aliments et comprenant un boîtier (1,1') dont une région formant embase (2,2') est destinée à recevoir divers accessoires comportant un bol (3) équipé d'un couvercle (4) et dans lequel tourne un outil de travail (5,6,8) qui peut être par exemple un hachoir, un coupe-légumes, une centrifugeuse à fruits et qui est entraîné, à travers un trou (9) pratiqué dans le fond (10) du bol, par l'arbre de sortie (11) d'un groupe moteur, ainsi qu'un dispositif électrique de commande de l'alimentation du moteur comportant un moyen de détection de la présence du couvercle (4) sur le bol (3) et susceptible de faire prendre audit dispositif un état actif d'autorisation de mise en marche du moteur lorsque le couvercle est amené en sa position correcte de fermeture du bol, ainsi qu'un variateur de vitesse destiné à adapter la vitesse de l'arbre de sortie en fonction de l'outil utilisé,
**caractérisé en ce que** le dispositif électrique de commande de l'alimentation du moteur comprend, en outre, un moyen de détection de la présence et du positionnement correct du bol (3) sur l'embase (2,2'), ainsi que des moyens d'identification des différents couvercles (4) qui sont associés au moyen de détection de la présence du couvercle sur le bol et qui sont adaptés à commander le variateur de vitesse afin d'associer à chaque couvercle (4) une vitesse déterminée de l'outil (5,6,8).

2. Appareil électroménager selon la revendication 1,
**caractérisé en ce que** les moyens de détection de la présence du bol (3) et de détection de la présence du couvercle (4) ainsi que les moyens d'identification du couvercle (4) comportent, d'une part, des capteurs (12,13,14) agencés dans le boîtier, et d'autre part, des actionneurs à distance (15-16,17,18,19) agencés dans le bol (3) et dans le couvercle (4).

3. Appareil électroménager selon la revendication 2,
**caractérisé en ce que** chaque capteur (12,13,14) est constitué d'un élément à effet HALL, tandis que chaque actionneur à distance (15-16,17,18,19) est constitué par un élément magnétique.

4. Appareil électroménager selon la revendication 3,
**caractérisé en ce que,** le boîtier (1) présentant la forme générale d'un L constitué par l'embase (2) et un bossage latéral (2') s'étendant en hauteur sur pratiquement toute la hauteur de l'accessoire, le capteur (12) de la présence du bol (3), et l'actionneur correspondant (15) sont agencés respectivement dans l'embase (2) et dans la région de fond (10) du bol, tandis que le ou les capteurs (13,14) et le ou les actionneurs correspondants de présence et d'identification (16,17,18,19) du couvercle (4) sont agencés respectivement dans le bossage (2') et dans le couvercle (4) de manière à être situés en regard les uns des autres lorsque le couvercle (4) est amené en sa position correcte de fermeture du bol (3).

5. Appareil électroménager selon la revendication 3,
**caractérisé en ce que,** le boîtier (1') présente un petit bossage (23) situé latéralement à l'embase (24), équipé d'un panneau mobile (25-26) monté articulé autour d'un axe horizontal (27) agencé sur la face latérale du petit bossage tourné vers l'embase, le ou les capteurs de présence et d'identification (13',14') du couvercle (4) étant agencés sur ledit panneau dans une région telle que lorsque le panneau est dressé verticalement, le ou lesdits capteurs sont situés en regard du ou des actionneurs (16,17,18,19) du couvercle du bol.

6. Appareil électroménager selon l'une quelconque des revendications 3 à 5,
**caractérisé en ce que** le bol (3) et le couvercle (4) étant réalisés en matière plastique, le ou les actionneurs (15-16,17,18,19) sont noyés dans ladite matière plastique.

7. Appareil électroménager selon l'une quelconque des revendications 3 à 6,
**caractérisé en ce que** les capteurs à effet HALL (12-13,14) sont reliés à un dispositif électronique (22) de traitement des signaux comportant un étage multiplexeur dont les sorties sont reliées à un potentiomètre numérique, lui-même relié à un circuit intégré dont les signaux de sortie vont déclencher ou non l'état actif du dispositif de commande de l'alimentation du moteur, ainsi que la commande du variateur de vitesse.

## Patentansprüche

1. Elektrisches Küchengerät mit mehreren Funktionen zum Bearbeiten von Lebensmitteln mit einem Gehäuse (1, 1'), von dem ein Bereich einen Sockel (2, 2') bildet, der zur Aufnahme verschiedener Zubehörteile mit einer Arbeitsschüssel (3) dient, die mit einem Deckel (4) ausgerüstet ist und in der sich ein Arbeitswerkzeug (5, 6, 8) dreht, das beispielsweise ein Hackmesser, ein Gemüseschneider, eine Saft-Zentrifuge sein kann und durch die Abtriebswelle (11) eines Motors, die eine im Boden (10) der Arbeitsschüssel ausgebildete Öffnung (9) durchsetzt, angetrieben ist, sowie mit einer elektrischen Steuerungsvorrichtung der Stromversorgung des Motors, die eine Detektor-Vorrichtung zum Feststellen der Anwesenheit des Deckels (4) auf der Arbeitsschüssel (3) aufweist, die die Steuervorrichtung in einen aktiven Zustand versetzen kann, in welchem sie die Einschaltung des Motors zuläßt, wenn der Deckel in seine richtige Stellung zum Verschließen der Arbeitsschüssel gebracht ist, sowie einen Geschwindigkeitsregler aufweist, der die Geschwindigkeit der Abtriebswelle entsprechend dem verwendeten Werkzeug anpaßt, **dadurch gekennzeichnet,** daß die elektrische Steuervorrichtung zur Stromversorgung des Motors außerdem eine Detektor-Vorrichtung zur Feststellung der Anwesenheit und richtigen Stellung der Arbeitsschüssel (3) auf dem Sockel (2, 2') sowie eine Vorrichtung zur Identifizierung verschiedener Deckel (4), die mit der Vorrichtung zur Feststellung der Anwesenheit des Deckels auf der Schüssel zusammenwirkt, aufweist, wobei diese Vorrichtung dazu dient, den Geschwindigkeitsregler zu steuern, um für jeden Deckel (4) eine bestimmte Geschwindigkeit des Werkzeugs (5, 6, 8) einzustellen.

2. Elektrisches Küchengerät nach Anspruch 1, **dadurch gekenn****zeichnet,** daß die Detektor-Vorrichtung zur Feststellung der Anwesenheit der Arbeitsschüssel (3) und zur Feststellung der Anwesenheit des Deckels (4) sowie die Vorrichtung zur Identifizierung des Deckels (4) einerseits im Gehäuse angeordnete Meßfühler (12, 13, 14) und andererseits in der Arbeitsschüssel (3) und dem Deckel (4) angeordnete Distanzschalter (15-16, 17, 18, 19) aufweist.

3. Elektrisches Küchengerät nach Anspruch 2, **dadurch gekenn****zeichnet,** daß jeder Fühler (12, 13, 14) aus einem HALL-Effektelement besteht, während jeder Distanzschalter (15-16, 17, 18, 19) aus einem magnetischen Element besteht.

4. Elektrisches Küchengerät nach Anspruch 3, **dadurch gekenn****zeichnet,** daß das Gehäuse (1) die allgemeine Form eines L hat und vom Sockel (2) und einem seitlichen buckelförmigen Gehäuseteil (2') gebildet wird, der sich der Höhe nach über praktisch die gesamte Höhe des Zubehörteils erstreckt, daß der Fühler (12) zur Feststellung der Anwesenheit der Arbeitsschüssel (3) und der entsprechende Distanzschalter (15) jeweils im Sockel (2) und im Bodenbereich (10) der Arbeitsschüssel angeordnet sind, während der oder die Fühler (13, 14) und der oder die entsprechenden Schalter zur Feststellung der Anwesenheit und Identifizierung (16, 17, 18, 19) des Deckels (4) jeweils im buckelförmigen Gehäuseteil (2') und im Deckel (4) so angeordnet sind, daß sie einander gegenüberliegen, wenn der Deckel (4) in seine richtige, die Schüssel (3) verschließende Stellung gebracht ist.

5. Elektrisches Küchengerät nach Anspruch 3, **dadurch gekenn****zeichnet,** daß das Gehäuse (1') einen seitlich vom Sockel (24) angeordneten kleinen buckelförmigen Gehäuseteil (23) aufweist, der mit einer beweglichen Platte (25-26) versehen ist, die um eine an der dem Sockel zugewandten Seitenfläche des kleinen Gehäuseteils ausgebildete horizontale Achse (27) schwenkbar gehalten ist, wobei der oder die Fühler zur Feststellung der Anwesenheit und Identifizierung (13', 14') des Deckels (4) an der Platte in einem solchen Bereich angeordnet sind, daß wenn die Platte vertikal gestellt ist, der oder die Fühler sich gegenüber dem oder den Distanzschaltern (16, 17, 18, 19) des Deckels der Arbeitsschüssel befinden.

6. Elektrisches Küchengerät nach einem der Ansprüche 3 bis 5, **dadurch gekennzeichnet,** daß die Arbeitsschüssel (3) und der Deckel (4) aus Kunststoff hergestellt sind, und der oder die Distanzschalter (15-16, 17, 18, 19) in das Kunststoffmaterial eingebettet sind.

7. Elektrisches Küchengerät nach einem der Ansprüche 3 bis 6, **dadurch gekennzeichnet,** daß die HALL-Effekt-Fühler (12-13, 14) mit einer elektronischen Signal-Verarbeitungsvorrichtung (22) verbunden sind, die eine Multiplexer-Stufe aufweist, deren Ausgänge mit einem numerischen Potentiometer verbunden sind, das selbst mit einer integrierten Schaltung verbunden ist, deren Ausgangssignale den aktiven Zustand der Steuerungsvorrichtung für die Stromversorgung des Motors sowie die Steuerung des Geschwindigkeitsreglers auslösen oder nicht auslösen.

## Claims

1. An electrical household appliance having multiple functions for the processing of food and comprising a housing (1, 1'), one region of which forming a base (2, 2') is intended to receive various attachments comprising a bowl (3) equipped with a lid (4), and in which a work tool (5, 6, 8) rotates, which may be, for example, a chopping blade, a vegetable blade, a juice extractor and which is driven, through a hole (9) provided in the base (10) of the bowl, by the driven spindle (11) of a motor unit, and also an electrical device-for controlling the power supply of the motor comprising a means for detecting the presence of the lid (4) on the bowl (3) and capable of making the said device assume an active state for enabling the start-up of the motor when the lid is brought into its correct bowl-closing position, and also a variable speed drive intended to adapt the speed of the driven spindle as a function of the tool used,
**characterised in that** the electrical device for controlling the power supply of the motor also comprises a means for detecting the presence and the correct position of the bowl (3) on the base (2, 2'), as well as means for identifying the different lids (4) which are associated with the means for detecting the presence of the lid on the bowl and which are adapted to control the variable speed drive in order to associate with each lid (4) a determined speed of the tool (5, 6, 8).

2. An electrical household appliance according to Claim 1,
**characterised in that** the means for detecting the presence of the bowl (3) and detecting the presence of the lid (4) and also the means for identifying the lid (4) comprise, firstly, sensors (12, 13, 14) disposed in the housing, and secondly long-distance actuators (15-16, 17, 18, 19) disposed in the bowl (3) and in the lid (4).

3. An electrical household appliance according to Claim 2,
**characterised in that** each sensor (12, 13, 14) is formed by a HALL element, whereas each long-distance actuator (15-16, 17, 18, 19) is formed by a magnetic element.

4. An electrical household appliance according to Claim 3,
**characterised in that** the housing (1) having a general L shape formed by the base (2) and a lateral projection (2') extending in height over practically the entire height of the attachment, the sensor (12) of the presence of the bowl (3), and the corresponding actuator (15) are disposed respectively in the base (2) and in the bottom region (10) of the bowl, whereas the sensors(s) (13, 14) and the corresponding presence and identification actuators(s) (16, 17, 18, 19) of the lid (4) are disposed respectively in the projection (2') and in the lid (4) so as to be situated opposite one another when the lid (4) is brought into its correct bowl (3) closing position.

5. An electrical household appliance according to Claim 3,
**characterised in that** the housing (1') has a small projection (23) situated to the side of the base (24), equipped with a mobile panel (25 - 26) mounted in articulated fashion around a horizontal axis (27) disposed on the lateral face of the small projection turned towards the base, the presence and identification sensor(s) (13', 14') of the lid (4) being disposed on said panel in a region so that when the panel is raised vertically, the sensor(s) is(are) situated opposite the actuator(s) (16, 17, 18, 19) of the lid of the bowl.

6. An electrical household appliance according to any one of Claims 3 to 5,
**characterised in that** as the bowl (3) and the lid (4) are made of plastic, the actuators(s) (15 - 16, 17, 18, 19) are embedded in the said plastic material.

7. An electrical household appliance according to any one of Claims 3 to 6,
**characterised in that** the HALL sensors (12 - 13, 14) are connected to an electronic device (22) for processing the signals comprising a stage multiplexer, the outputs of which are connected to a numerical potentiometer, itself connected to an integrated circuit, the output signals of which will trigger or not the active state of the device for controlling the power supply of the motor, as well as the control of the variable speed drive.
